(19) **Europäisches Patentamt / European Patent Office / Office européen des brevets**

(11) **EP 3 421 950 B1**

(12) **EUROPÄISCHE PATENTSCHRIFT**

(45) Veröffentlichungstag und Bekanntmachung des Hinweises auf die Patenterteilung:
**29.09.2021 Patentblatt 2021/39**

(21) Anmeldenummer: **18177966.1**

(22) Anmeldetag: **15.06.2018**

(51) Int Cl.:
**G01F 1/74** *(2006.01)*      **G01N 27/22** *(2006.01)*
**G01F 1/58** *(2006.01)*      **G01N 9/00** *(2006.01)*

(54) **DURCHFLUSSSENSOR, VERFAHREN UND DURCHFLUSSMESSGERÄT ZUR BESTIMMUNG VON GESCHWINDIGKEITEN VON PHASEN EINES MEHRPHASIGEN MEDIUMS**

FLOW SENSOR, METHOD AND FLOW METER FOR DETERMINING VELOCITIES OF PHASES OF A MULTI-PHASE MEDIUM

CAPTEUR DE DÉBIT, PROCÉDÉ ET DÉBITMÈTRE DESTINÉS À LA DÉTERMINATION DE VITESSES DES PHASES D'UN MILIEU MULTIPHASE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2017 DE 102017113453**

(43) Veröffentlichungstag der Anmeldung:
**02.01.2019 Patentblatt 2019/01**

(73) Patentinhaber: **Krohne AG**
**4019 Basel (CH)**

(72) Erfinder:
• **Janssens, Yves Louis**
  **2513GE Den Haag (NL)**
• **Cornelis Johannes, Hogendoorn**
  **4211 BG Spijk (NL)**

(74) Vertreter: **Gesthuysen, Michael**
**Gesthuysen, von Rohr & Eggert**
**Huyssenallee 100**
**45128 Essen (DE)**

(56) Entgegenhaltungen:
DE-A1-102008 022 215      JP-A- H03 138 534
JP-A- S63 246 619      US-A1- 2013 261 995
US-B1- 6 823 271

• R. POHLE: "5.4.1 Potentials of Capacitive Micromachined Ultrasonic Transducers (CMUT) and Film Bulk Acoustic Wave Resonators (FBAR) for Gas Sensing -an Industrial Point of View", 14TH INTERNATIONAL MEETING ON CHEMICAL SENSORS - IMCS 20122012-05-20 - 2012-05-23NUERNBERG/NUREMBERG, GERMANY, 2012, XP055525574, DOI: 10.5162/IMCS2012/5.4.1 ISBN: 978-3-9813484-2-2

**Beschreibung**

Die Erfindung betrifft zunächst einen Durchflusssensor für ein Durchflussmessgerät. Dabei weist der Durchflusssensor einen Sensorträger und der Sensorträger mindestens einen ersten Sensorverbund auf. Weiter betrifft die Erfindung ein Verfahren zur Bestimmung von Geschwindigkeiten von Phasen eines mehrphasigen Mediums mit einem Durchflusssensor. Darüber hinaus betrifft die Erfindung auch ein Durchflussmessgerät mit einer Sensorsteuerung, einem Messrohr und mindestens einem Durchflusssensor. Dabei ist das Durchflussmessgerät zur Bestimmung von Geschwindigkeiten von Phasen eines mehrphasigen Mediums im Messrohr ausgebildet.

Allgemein bestimmt ein Durchflussmessgerät einen Durchfluss eines Mediums durch ein Messrohr. Bei dem Durchfluss kann es sich um einen Masse- oder um einen Volumendurchfluss des Mediums handeln. Grundsätzlich wird der Durchfluss unter Verwendung einer Geschwindigkeit des Mediums bestimmt, mit welcher das Medium durch das Messrohr strömt. Oftmals besteht das Medium nicht nur aus einer einzigen, sondern aus mehreren Phasen und wird dann als mehrphasiges Medium bezeichnet. Um den Durchfluss einer Phase eines mehrphasigen Mediums durch das Messrohr zu bestimmen, muss entsprechend eine Geschwindigkeit der Phase bestimmt werden, mit welcher die Phase durch das Messrohr strömt. Zur Bestimmung von Geschwindigkeiten von Phasen eines mehrphasigen Mediums weist ein Durchflussmessgerät mindestens einen Durchflusssensor auf. Eine Sensorsteuerung eines Durchflussmessgeräts ist ausgebildet, im Betrieb des Durchflussmessgeräts, also wenn ein mehrphasiges Medium durch das Messrohr strömt, ein Verfahren zur Bestimmung von Geschwindigkeiten von Phasen des mehrphasigen Mediums mit einem Durchflusssensor auszuführen. Für gewöhnlich ist die Sensorsteuerung weiterhin ausgebildet, aus den bestimmten Geschwindigkeiten den Durchfluss der Phasen des mehrphasigen Mediums durch das Messrohr zu bestimmen. Das Dokument US 6,823,271 B1 offenbart z.B. einen solchen Durchflussmesser.

Aus dem Stand der Technik sind unterschiedliche Messprinzipien bekannt, eine Geschwindigkeit eines Mediums zu bestimmen, mit welcher das Medium durch ein Messrohr strömt. Die unterschiedlichen Messprinzipien werden von unterschiedlichen Durchflussmessgeräten mit unterschiedlichen Durchflusssensoren und unterschiedlichen Verfahren umgesetzt.

Zum Beispiel sind Durchflussmessgeräte bekannt, die nach mechanischen Messprinzipien arbeiten. Ein solches Messprinzip wird zum Beispiel von Differenzdruckdurchflussmessgeräten umgesetzt. Bei einem Differenzdruckdurchflussmessgerät ist der mindestens erste Durchflusssensor als Drucksensor zur Messung eines Differenzdrucks eines durch das Messrohr strömenden Mediums ausgebildet. Unter Verwendung eines vom Drucksensor gemessenen Differenzdrucks wird eine Geschwindigkeit des Mediums im Messrohr bestimmt. Ein mechanisches Messprinzip setzen auch Wirbeldurchflussmessgeräte um. Bei einem Wirbeldurchflussmessgerät ist der mindestens erste Durchflusssensor zum Beispiel als Drucksensor oder Dehnungsmessstreifen oder piezoelektrischer Wandler zur Bestimmung einer Wirbelfrequenz eines durch das Messrohr strömenden Mediums ausgebildet. Unter Verwendung einer vom Durchflusssensor gemessenen Wirbelfrequenz wird eine Geschwindigkeit des Mediums im Messrohr bestimmt.

Weiter sind Durchflussmessgeräte bekannt, die nach einem akustischen Messprinzip arbeiten. Diese Durchflussmessgeräte werden als Ultraschalldurchflussmessgeräte bezeichnet. Bei einem Ultraschalldurchflussmessgerät ist der mindestens erste Durchflusssensor als Ultraschallsensor ausgebildet. Vom Ultraschallsensor werden Ultraschallsignale in ein durch das Messrohr strömendes Medium gesendet und empfangen und wird unter Verwendung der gesendeten und empfangenen Ultraschallsignale eine Geschwindigkeit des Mediums im Messrohr bestimmt.

Aus dem Stand der Technik bekannte Durchflusssensoren und Durchflussmessgeräte weisen verschiedene Nachteile auf. Ihre Herstellung ist oftmals aufwendig und entsprechend teuer und/oder sie arbeiten nach einem Messprinzip und Verfahren, das nur eine Bestimmung einer Geschwindigkeit eines einphasigen Mediums erlaubt.

Eine Aufgabe der vorliegenden Erfindung ist deshalb die Angabe eines Durchflusssensors für ein Durchflussmessgerät, der die Bestimmung von Geschwindigkeiten von Phasen eines mehrphasigen Mediums ermöglicht und bei dem die aufgezeigten Nachteile zumindest vermindert sind.

Die Aufgabe ist bei dem Durchflusssensor durch die Merkmale von Patentanspruch 1 gelöst. Der mindestens erste Sensorverbund des erfindungsgemäßen Durchflusssensors weist einen ersten Permittivitätssensor zur Bestimmung einer ersten Permittivität eines mehrphasigen Mediums, einen zweiten Permittivitätssensor zur Bestimmung einer zweiten Permittivität des Mediums, einen Dichtesensor zur Bestimmung eine Dichte des Mediums und eine erste Sensorachse auf. Weiter sind der erste Permittivitätssensor, der zweite Permittivitätssensor und der Dichtesensor auf dem Sensorträger entlang der ersten Sensorachse angeordnet und sind der erste Permittivitätssensor und der zweite Permittivitätssensor mit einem räumlichen Permittivitätssensorabstand beabstandet.

Bei den zu bestimmenden Permittivitäten, also der ersten und der zweiten Permittivität, handelt es sich um relative Permittivitäten. Zu deren Bestimmung weisen der erste und der zweite Permittivitätssensor jeweils einen sensitiven Bereich auf. Zur Bestimmung der Dichte weist der Dichtesensor ebenfalls einen sensiven Bereich auf. Zumindest die sensiven Bereiche der Sensoren sind im Betrieb des Durchflusssensors in mittel- oder unmittelbaren Kontakt mit dem mehrphasigen Medium und sprechen auf die jeweilige Messgröße, also Permittivität oder Dichte, unmittelbar an.

Ein Sensorträger ist eine Vorrichtung, auf welcher mindestens ein Sensor angeordnet ist. Die Anordnung ist eine mechanisch feste Verbindung zwischen dem Sensor und dem Sensorträger, sodass der Sensor auf dem Sensorträger fixiert ist. Ein Sensorverbund im Allgemeinen umfasst mindestens zwei Sensoren, wobei die Sensoren eines Sensorverbunds zusammen die physikalischen Größen messen, die notwendig sind, um Geschwindigkeiten von Phasen eines mehrphasigen Mediums zu bestimmen. Somit weist ein Sensorträger mit einem Sensorverbund im Allgemeinen mindestens zwei Sensoren auf.

Der erste Permittivitätssensor, der zweite Permittivitätssensor und der Dichtesensor sind entlang der ersten Sensorachse angeordnet. Das bedeutet, dass die Sensoren entweder links und rechts entlang der Sensorachsen oder vorzugsweise auf der Sensorachse angeordnet sind. Wenn zumindest der erste und der zweite Permittivitätssensor auf der Sensorachse angeordnet sind, dann ist der Permittivitätssensorabstand der Abstand zwischen den beiden Sensoren auf der Sensorachse.

Ein Vorteil des erfindungsgemäßen Durchflusssensors gegenüber aus dem Stand der Technik bekannten Durchflusssensoren ist, dass Geschwindigkeiten von Phasen eines mehrphasigen Mediums bestimmt werden können. Darüber hinaus sind die wesentlichen Komponenten des Durchflusssensors, also der Sensorträger und die Sensoren, kostengünstig und ist die Herstellung des Durchflusssensors im Vergleich zum Stand der Technik mit einem geringeren Aufwand verbunden und entsprechend kostengünstig.

Der Erfindung liegen mehrere Erkenntnisse zugrunde.

Eine Erkenntnis ist, dass ein Medium, wie zum Beispiel ein mehrphasiges Medium, bei Strömung, zum Beispiel durch ein Messrohr, verschiedene Strömungsstrukturen aufweist. Strömungsstrukturen sind zum Beispiel Strömungswirbel oder Blasen von einer Phase in einer anderen Phase oder die Verteilung der einzelnen Phasen. Bei Untersuchung von Strömungsstrukturen ist erkannt worden, dass jeweils zwei Phasen eines mehrphasigen strömenden Mediums durch eine Grenzschicht voneinander getrennt sind. Weist ein mehrphasiges Medium zum Beispiel die Phasen Wasser, Öl und Gas auf, so strömen eingebettet im Wasser zum Beispiel Blasen aus Öl und Gas, wobei die Geschwindigkeiten der Phasen voneinander verschieden sind. In diesem Beispiel trennt zum Beispiel eine Grenzschicht eine Blase aus Öl und das Wasser und eine andere Grenzschicht eine Blase aus Gas und das Wasser.

Eine weitere Erkenntnis ist, dass die Phasen eines mehrphasigen Mediums unterschiedliche Permittivitäten und/oder unterschiedliche Dichten aufweisen. So beträgt die Permittivität von Wasser $\varepsilon_{r,\,Wasser} = 80$, von Öl $\varepsilon_{r,\,Öl} = 2,5$ und von Gas $\varepsilon_{r,\,Gas} = 1$. Die Dichte von Wasser beträgt $\rho_{Wasser} = 1000$ kg/m$^3$, von Öl $\rho_{Öl} = 800$ kg/m$^3$, und von Gas $\rho = 1$ kg/m$^3$. Somit können die Phasen aus dem beschriebenen Beispiel voneinander durch Bestimmung von Permittivität und Dichte unterschieden werden. Eine Grenzschicht trennt demnach Bereiche unterschiedlicher Permittivität und/oder unterschiedlicher Dichte voneinander. Deshalb weist der Durchflusssensor sowohl die Permittivitätssensoren als auch den Dichtesensor auf.

Eine weitere Erkenntnis ist, dass einer Geschwindigkeit einer Phase des Mediums, zum Beispiel einer oben beschriebenen Blase, eine Geschwindigkeit einer Grenzschicht zugeordnet werden kann, zum Beispiel die Grenzschicht der Blase. Deshalb weist der Durchflusssensor zu Bestimmung der Geschwindigkeit einer Grenzschicht den ersten und den zweiten Permittivitätssensor auf.

Untersuchungen an Strömungsstrukturen von mehrphasigen Medien haben gezeigt, dass Strömungsstrukturen für gewöhnlich nicht kleiner als 0,5 mm sind. Bei Versuchen mit Durchflusssensoren hat sich gezeigt, dass eine Genauigkeit einer Bestimmung von Geschwindigkeiten von Phasen eines mehrphasigen Mediums abnimmt, wenn die sensitiven Bereiche der Sensoren des Durchflusssensors größer als die Strömungsstrukturen sind. Deshalb ist in einer Ausgestaltung des erfindungsgemäßen Durchflusssensors vorgesehen, dass sensitive Bereiche der Sensoren kleiner als kleinste Strömungsstrukturen des Mediums sind, vorzugsweise kleiner als 0,5 mm sind.

In einer weiteren Ausgestaltung ist vorgesehen, dass der Dichtesensor zwischen dem ersten Permittivitätssensor und dem zweiten Permittivitätssensor angeordnet ist. Da der erste und der zweite Permittivitätssensor durch den Permittivitätssensorabstand beabstandet sein müssen, bewirkt die Anordnung des Dichtesensors zwischen den Permittivitätssensoren einen kompakteren Sensorverbund, als wenn der Dichtesensor nur neben einem der Permittivitätssensoren angeordnet wäre. Der kompaktere Sensorverbund bewirkt, dass kleine Strömungsstrukturen einen geringeren Abfall der Genauigkeit des Sensorverbunds bewirken, als wenn der Dichtesensor nicht zwischen den Permittivitätssensoren angeordnet wäre.

In einer weiteren Ausgestaltung des Durchflusssensors ist vorgesehen, dass der Sensorträger eine Platine ist. Vorzugsweise besteht die Platine aus FR-4. Die Aufgabe des Sensorträgers ist zunächst die Anordnung der Sensoren, also des ersten und zweiten Permittivitätssensors und des Dichtesensors. Da es sich bei den Sensoren um elektrische Komponenten handelt, müssen diese auch elektrisch angeschlossen sein. Deshalb ist es vorteilhaft, wenn der Sensorträger die Sensoren nicht nur anordnet, sondern auch elektrisch kontaktiert, sodass diese elektrisch angeschlossen sind. Beides leistet eine Platine, da Platinen einen Träger aufweisen, auf dem zumindest auf einer Seite eine Kupferschicht aufgebracht ist, aus welcher Leiterbahnen zum Beispiel durch Ätzen hergestellt werden können. Die elektrische Kontaktierung der Sensoren erfolgt zum Beispiel durch Leiterbahnen und Vias.

Permittivitätssensoren wie der erste und zweite Permittivitätssensor sind Sensoren, welche eine Permittivität eines Mediums bestimmen. Die Bestimmung einer Permittivität eines Mediums kann auch über die Bestimmung einer Kapazität des Mediums erfolgen, weshalb in einer weiteren Ausgestaltung vorgesehen ist, dass mindestens der erste Permittivitätssensor als Kapazitätssensor ausgebildet ist. Aus einer bestimmten Kapazität ist dann die Permittivität bestimmbar. Vorzugsweise sind sowohl der erste als auch der zweite Permittivitätssensor als Kapazitätssensor ausgebildet.

In einer Weiterbildung der vorangehenden Ausgestaltung ist vorgesehen, dass der Kapazitätssensor eine erste Elektrode und eine zweite Elektrode zur Bestimmung einer Kapazität des Mediums aufweist. Vorzugsweise sind die Elektroden, also die erste und zweite Elektrode, als rechteckige Flächen mit einer Breite $b$ und einer Länge $l$ ausgebildet. Dann bietet sich eine Anordnung der Elektroden an, bei welcher die Elektroden parallel zueinander mit einem Abstand $a$ angeordnet sind. Die Fläche $A$ des sensitiven Bereichs eines solchen Kapazitätssensors beträgt dann $A = (b + a + b) \cdot l$. Die Eindringtiefe $T$ des Kapazitätssensors in das Medium beträgt:

$$ T = a \sqrt{\left(1 + \frac{b}{a}\right)^2 - 1} $$

Demnach bietet es sich an, auf dem Sensorträger mehrere Sensorverbünde mit unterschiedlichen Eindringtiefen der Permittivitätssensoren anzuordnen, sodass die Permittivität des Mediums an verschiedenen Stellen bestimmbar ist.

Wenn der Sensorträger eine Platine ist und mindestens der erste Permittivitätssensor als Kapazitätssensor mit einer erste und einer zweiten Elektrode ausgestaltet ist, dann ist es vorteilhaft, wenn mindestens die erste Elektrode als eine Leiterbahn der Platine ausgebildet ist. Die Elektrode ist dabei zum Beispiel durch Ätzen hergestellt. Somit können die Elektroden der Permittivitätssensoren und Kontaktierungen der Sensoren zusammen hergestellt werden. Somit zeichnet sich diese Ausgestaltung durch eine effiziente und daher kostengünstige Herstellung aus.

Wenn mindestens die erste Elektrode als eine Leiterbahn der Platine ausgebildet ist, so ist in einer weiteren Ausgestaltung vorgesehen, dass zumindest die Leiterbahn passiviert ist. Vorzugsweise sind alle Leiterbahnen der Platine passiviert. Eine Passivierung ist notwendig, da Leiterbahnen andernfalls in unmittelbarem Kontakt mit dem Medium stehen würden, wodurch sie beschädigt werden könnten. Vorzugsweise erfolgt die Passivierung durch amorphen Kohlenstoff, der im Englischen als Diamand-like Carbon bezeichnet und als DLC abgekürzt wird.

Der Dichtesensor kann verschieden ausgebildet sein. In einer Ausgestaltung des Durchflusssensors ist vorgesehen, dass der Dichtesensor als Piezosensor ausgebildet ist. Ein Piezosensor weist piezoelektrisches Material auf. Dieses Material wandelt eine mechanische Deformation in ein elektrisches Signal und ein elektrisches Signal in eine mechanische Deformation um. Als piezoelektrisches Material bietet sich Blei-Zirkonat-Titanat an, welches mit PZT abgekürzt wird. Ein Piezosensor hat zum Beispiel einen Durchmesser von 200 $\mu$m und eine Dicke von 50 $\mu$m und wird zum Beispiel durch eine Sensorsteuerung mit einem elektrischen Signal zu einer mechanischen Schwingung angeregt und wird von der Sensorsteuerung eine Frequenz gemessen. Da die gemessene Frequenz von einer Dichte des Mediums am sensitiven Bereich des Piezosensors abhängig ist, ist aus der gemessenen Frequenz die Dichte des Mediums am Sensor bestimmbar.

In einer Weiterbildung der vorstehenden Ausgestaltung ist vorgesehen, dass der Piezosensor als Film Bulk Acoustic Wave Resonator ausgebildet ist. Film Bulk Acoustic Wave Resonator wird mit FBAR abgekürzt. Vorzugsweise ist der FBAR auf einer mikromechanischen Siliziumnitrid-Membran mit einem piezoelektrischen Dünnfilm und Aluminiumelektroden aufgebaut. Ein FBAR ist sowohl für dampfförmige als auch flüssige Medium geeignet und ermöglicht kleine Dimensionen und eine hohe Empfindlichkeit, sodass auch kleine Veränderungen in einer Konzentration von Gasen und Flüssigkeiten bestimmt werden können.

In einer anderen Ausgestaltung des Durchflusssensors ist vorgesehen, dass der Dichtesensor ein kapazitiver mikromechanischer Ultraschallwandler ist. Ein Vorteil eines kapazitiven mikromechanischen Ultraschallwandlers gegenüber einem Piezosensor als Dichtesensor ist, dass er im Vergleich zum Piezosensor keine hohe Permittivität aufweist, welche eine Bestimmung einer Permittivität des Mediums durch die Permittivitätssensoren beeinträchtigen kann.

In einer weiteren Ausgestaltung ist vorgesehen, dass der Sensorträger eine Ausnehmung aufweist und der Dichtesensor in der Ausnehmung angeordnet ist. Diese Ausgestaltung ist insbesondere dann vorteilhaft, wenn der Sensorträger eine Platine ist und die Permittivitätssensoren als Kapazitätssensoren mit Elektroden ausgebildet sind, wobei die Elektroden Leiterbahnen sind. Bei dieser Ausgestaltung ist eine Oberfläche des Sensorträgers im Wesentlichen eben, wodurch eine Strömung eines über den Sensorträger strömenden Mediums nicht beeinflusst wird.

In einer weiteren Ausgestaltung ist vorgesehen, dass mindestens einer der Sensoren als ein Mikrosensor ausgebildet ist. Mikrosensoren sind Sensoren, die Strukturen zumindest der sensitiven Bereiche aufweisen, deren Größen im Mikrometerbereich liegen.

In einer weiteren Ausgestaltung ist vorgesehen, dass der Sensorträger neben dem ersten Sensorverbund mit der ersten Sensorachse auch einen zweiten Sensorverbund mit einer zweiten Sensorachse aufweist und dass die erste Sensorachse und die zweite Sensorachse voneinander verschieden sind. Die erste Sensorachse und die zweite Sensorachse sind derart voneinander verschieden, dass die erste Sensorachse und die zweite Sensorachse eine Ebene aufspannen.

Eine weitere Aufgabe der Erfindung ist die Angabe eines Verfahrens zur Bestimmung von Geschwindigkeiten von Phasen eines mehrphasigen Mediums mit einem erfindungsgemäßen Durchflusssensor.

Die Aufgabe ist durch ein Verfahren mit den Merkmalen von Anspruch 15 gelöst, bei dem der Durchflusssensor in ein strömendes mehrphasiges Medium eingetaucht ist. Gemäß dem erfindungsgemäßen Verfahren wird mit dem ersten Permittivitätssensor ein erster Permittivitätsverlauf, mit dem zweiten Permittivitätssensor ein zweiter Permittivitätsverlauf und mit dem Dichtesensor eine Dichteverlauf des Mediums bestimmt. Weiter wird unter Verwendung eines Korrelationsverfahrens auf den ersten Permittivitätsverlauf, den zweiten Permittivitätsverlauf und den Dichteverlauf eine Geschwindigkeit einer Phase des Mediums bestimmt.

Der erste Permittivitätsverlauf des Mediums wird bestimmt, indem mit dem ersten Permittivitätssensor die erste Permittivität des Mediums über der Zeit bestimmt wird. Entsprechend wird der zweite Permittivitätsverlauf bestimmt, indem mit dem zweiten Permittivitätssensor die zweite Permittivität des Mediums über der Zeit bestimmt wird. Analog wird der Dichteverlauf des Mediums bestimmt, in dem mit dem Dichtesensor die Dichte des Mediums über der Zeit bestimmt wird.

In einer Ausgestaltung des Verfahrens ist vorgesehen, dass während des Korrelationsverfahrens die folgenden Verfahrensschritte ausgeführt werden.

In einem Verfahrensschritt wird eine Permittivitätsänderung im ersten Permittivitätsverlauf detektiert und dann die Permittivitätsänderung auch im zweiten Permittivitätsverlauf detektiert.

In einem weiteren Verfahrensschritt wird ein zeitlicher Permittivitätsänderungsabstand zwischen der Permittivitätsänderung im ersten Permittivitätsverlauf und der im zweiten Permittivitätsverlauf bestimmt und unter Verwendung des Permittivitätsänderungsabstands und des Permittivitätssensorabstands eine Geschwindigkeit der Permittivitätsänderung bestimmt.

In einem weiteren Verfahrensschritt wird unter Verwendung des Dichteverlaufs und/oder des ersten Permittivitätsverlaufs und/oder des zweiten Permittivitätsverlaufs einer Geschwindigkeit einer Phase des Mediums die bestimmte Geschwindigkeit der Permittivitätsänderung zugeordnet.

Diese Verfahrensschritte werden bei Vorhandensein nicht nur einer Permittivitätsänderung, sondern auch bei Vorhandensein mehrerer Permittivitätsänderungen entsprechend ausgeführt.

Zwei Phasen eines mehrphasigen Mediums weisen oftmals unterschiedliche Permittivitäten auf. Eine Grenzschicht dieser beiden Phasen weist somit eine Permittivitätsänderung auf, die sowohl vom ersten Permittivitätssensor als auch vom zweiten Permittivitätssensor gemessen wird, wenn die Permittivitätsänderung an beiden Sensoren vorbeiströmt. Da der räumliche Permittivitätssensorabstand bekannt ist und der zeitliche Permittivitätsänderungsabstand bestimmt ist, kann aus diesen Informationen die Geschwindigkeit der Permittivitätsänderung, also der Grenzschicht, bestimmt werden. In dem letzten Verfahrensschritt wird einer Geschwindigkeit einer Phase des Mediums dann die Geschwindigkeit der Permittivitätsänderung zugeordnet. Die Zuordnung erfolgt gemäß einem Korrelationsverfahren.

Eine weitere Aufgabe der vorliegenden Erfindung ist die Angabe eines Durchflussmessgeräts zur Bestimmung von Geschwindigkeiten von Phasen eines mehrphasigen Mediums, bei dem die eingangs aufgezeigten Nachteile zumindest vermindert sind.

Die Aufgabe ist bei dem Durchflussmessgerät mit den Merkmalen von Patentanspruch 17 gelöst. Bei dem erfindungsgemäßen Durchflussmessgerät ist der mindestens erste Durchflusssensor des Durchflussmessgeräts gemäß dem erfindungsgemäßen Durchflusssensor ausgebildet und ist die Sensorsteuerung zur Ausführung eines erfindungsgemäßen Verfahrens ausgebildet. Weiter ist der mindestens erste Durchflusssensor an einer Position am Messrohr angeordnet, sodass, wenn ein mehrphasiges Medium durch das Messrohr strömt, er vom Medium umströmt ist, er eine erste Eindringtiefe in das Medium aufweist und die erste Sensorachse eine zu einer Strömungsrichtung des Mediums parallele Komponente aufweist. Weiter ist die Sensorsteuerung vorzugsweise zur Steuerung des mindestens ersten Durchflusssensors ausgebildet.

Die Vorteile, die sich durch den erfindungsgemäße Durchflusssensor und das erfindungsgemäße Verfahren ergeben, übertragen sich auf das erfindungsgemäße Durchflussmessgerät.

In einer Ausgestaltung des erfindungsgemäßen Durchflussmessgeräts ist vorgesehen, dass das Messrohr ausgebildet ist, sodass der mindestens erste Durchflusssensor im Betrieb des Durchflussmessgeräts aus- und einbaubar ist. Somit kann das Medium bei einem Austausch des Durchflusssensors im Messrohr verbleiben, wodurch der Zeitbedarf für einen Austausch reduziert ist.

In einer weiteren Ausgestaltung ist vorgesehen, dass die Sensorsteuerung mindestens einen elektrischen Schwingkreis mit einer Resonanzfrequenz aufweist, dass der erste Permittivitätssensor ein Teil des Schwingkreises ist und dass die erste Permittivität im Medium unter Verwendung der Resonanzfrequenz des Schwingkreises bestimmt wird. Bei dem Schwingkreis handelt es sich zum Beispiel um einen RC- oder LC-Schwingkreis, wobei der erste Permittivitätssensor zur kapazitiven Komponente des Schwingkreises beiträgt. Dabei ist die Kapazität des Mediums in der Resonanzfrequenz enthalten. In einer Weiterbildung ist vorgesehen, dass Gleiches auch in Verbindung mit dem zweiten Permittivitätssensor umgesetzt ist.

In einer weiteren Ausgestaltung ist vorgesehen, dass das Durchflussmessgerät neben dem ersten Durchflusssensor mit der ersten Position und der ersten Eindringtiefe noch einen zweiten Durchflusssensor an einer zweiten Position am Messrohr mit einer zweiten Eindringtiefe in das Medium aufweist und die zweite Position von der ersten Position und/oder die zweite Eindringtiefe von der ersten Eindringtiefe verschieden sind bzw. ist. Weiter ist die Sensorsteuerung zur Steuerung sowohl des ersten als auch des zweiten Durchflusssensors ausgebildet.

Durch die Verwendung von zwei oder mehr Durchflusssensoren an verschiedenen Positionen am Messrohr und/oder mit verschiedenen Eindringtiefen in das Medium erfolgt die Bestimmung von Geschwindigkeiten von Phasen des mehrphasigen Mediums an verschiedenen Stellen, wodurch eine höhere Auflösung gegeben ist.

Im Einzelnen ist eine Vielzahl von Möglichkeiten gegeben, den Durchflusssensor, das Verfahren und das Durchflussmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigt

Fig. 1      ein erstes Ausführungsbeispiel eines Durchflussmessgeräts mit zwei Durchflusssensoren,

Fig. 2a, 2b   ein erstes Ausführungsbeispiel eines Durchflusssensors,

Fig. 3      ein zweites Ausführungsbeispiel eines Durchflusssensors,

Fig. 4      ein zweites Ausführungsbeispiel eines Durchflussmessgeräts mit einem Durchflusssensor,

Fig. 5a bis 5c   Messsignale des Durchflusssensors und

Fig. 6      ein Ablaufdiagramm eines Verfahrens.

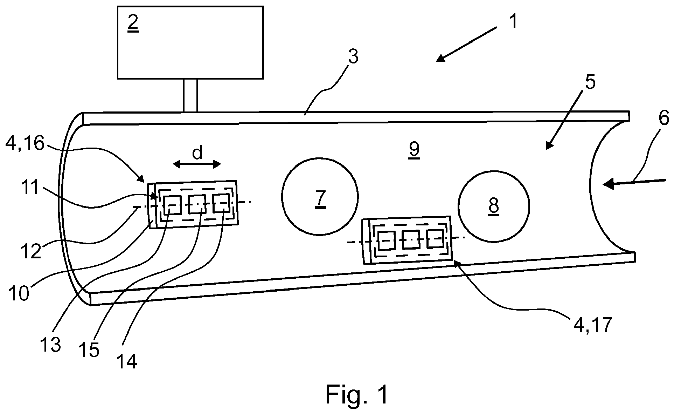

Fig. 1 zeigt in einer abstrahierten perspektivischen Schnittdarstellung wesentliche Merkmale ein erstes Ausführungsbeispiel eines Durchflussmessgeräts 1. Das Durchflussmessgerät 1 weist eine Sensorsteuerung 2, ein Messrohr 3 und zwei Durchflusssensoren 4 auf. Da das Durchflussmessgerät 1 im Betrieb ist, strömt ein mehrphasiges Medium 5 durch das Messrohr 3. Das mehrphasige Medium 5 weist im Wesentlichen die Phasen Wasser, Öl und Gas auf. Die einzelnen Phasen weisen unterschiedliche Strömungsstrukturen auf, die sich in ihren Strömungsgeschwindigkeiten und Strömungsrichtungen voneinander unterscheiden. Jedoch strömt das Medium 5 in seiner Gesamtheit in einer Gesamtströmungsrichtung 6 durch das Messrohr 3. In Fig. 1 stellen eine Ölblase 7 und eine Gasblase 8, die in Wasser 9 eingebettet sind, die Strömungsstrukturen des Mediums 5 beispielhaft dar.

Der Durchflusssensor 4 weist einen Sensorträger 10 und dieser einen Sensorverbund 11 auf. Der Sensorverbund 11 weist eine Sensorachse 12 auf und umfasst einen ersten Permittivitätssensor 13 zur Bestimmung einer ersten Permittivität, einen zweiten Permittivitätssensor 14 zur Bestimmung einer zweiten Permittivität des Mediums 5 und einen Dichtesensor 15 zur Bestimmung einer Dichte des Mediums 5. Die Sensoren 13, 14 und 15 sind auf der Sensorachse 12 angeordnet, und zwar derart, dass der Dichtesensor 15 zwischen dem ersten Permittivitätssensor 13 und dem zweiten Permittivitätssensor 14 liegt.

Einer der beiden Durchflusssensoren 4 ist an einer ersten Messposition 16 am Messrohr 3 angeordnet, sodass er vom Medium 5 umströmt wird. Er weist eine erste Eindringtiefe in das Medium 5 und seine Sensorachse 12 eine parallele Komponente zu einer Strömungsrichtung des Mediums 5 auf. Der andere der beiden Durchflusssensoren 4 ist an einer zweiten Messposition 17 am Messrohr 3 angeordnet, sodass auch er vom Medium 5 umströmt wird. Er weist eine zweite Eindringtiefe in das Medium 5 auf, die von der ersten Eindringtiefe verschieden ist, und seine Sensorachse 12 eine parallele Komponente zu einer Strömungsrichtung des Mediums 5. In diesem Ausführungsbeispiel weisen die Sensorachsen 12 insbesondere eine parallele Komponenten zur Gesamtströmungsrichtung 6 auf. In einer alternativen Ausgestaltung des Durchflussmessgeräts ist zumindest einer der beiden Durchflusssensoren um 90° um seine Sensorachse 12 gedreht am Messrohr 3 angeordnet.

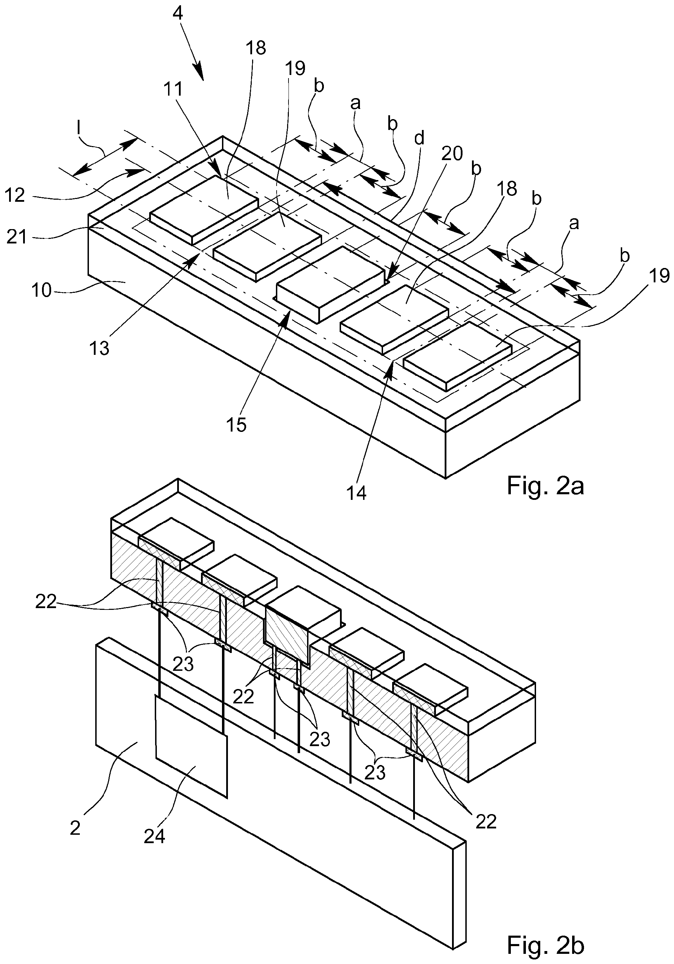

Fig. 2a zeigt in einer abstrahierten perspektivischen Darstellung wesentliche Merkmale des Durchflusssensors 4. Fig. 2b ergänzt Fig. 2a um eine Schnittdarstellung, aus welcher auch die elektrischen Verbindungen der Sensoren 13, 14 und 15 mit der Sensorsteuerung 2 ersichtlich sind. Der Schnitt ist entlang einer Ebene erfolgt, in welcher die Sensorachse 12 liegt. Der Durchflusssensor 4 ist ein erstes Ausführungsbeispiel. Der Durchflusssensor 4 weist — wie bereits ausgeführt worden ist — den Sensorträger 10 mit dem Sensorverbund 11 auf. Der Sensorverbund 11 weist die Sensorachse 12, den ersten Permittivitätssensor 13, den zweiten Permittivitätssensor 14 und den Dichtesensor 15 auf. Die Sensoren 13, 14 und 15 sind auf der Sensorachse 12 angeordnet. Die beiden Permittivitätssensoren 13 und 14 sind mit dem Permittivitätssensorabstand *d* beabstandet und zwischen Ihnen liegt der Dichtesensor 15.

Der Sensorträger 10 ist eine Platine. Eine Platine wie die vorliegende besteht aus einem elektrisch isolierenden plattenförmigen Träger, der auf beiden Seiten mit jeweils einer Kupferschicht versehen ist. Das Material des Trägers ist vorliegend FR-4. Leiterbahnen werden zum Beispiel durch selektives Wegätzen der Kupferschichten hergestellt. Elektrische Verbindungen zwischen den beiden Seiten des Trägers werden durch Vias hergestellt.

Der erste Permittivitätssensor 13 und der zweite Permittivitätssensor 14 sind identisch ausgebildet, weshalb im Folgenden nur der erste Permittivitätssensor 13 betrachtet wird. Der erste Permittivitätssensor 13 ist als ein Kapazitätssensor mit einer ersten Elektrode 18 und einer zweiten Elektrode 19 zur Bestimmung einer Kapazität des Mediums 5 ausgebildet. Jede der Elektrode 18 und 19 ist eine Leiterbahn der Platine. Da die Kapazität des Mediums 5 an den Elektroden 18 und 19 bestimmt wird, sind die Elektrode 18 und 19 zusammengenommen der sensitive Bereich des Permittivitätssensors 13. Die Breite *b* und die Länge *l* jeder der Elektroden 18 und 19 beträgt $b = l = 0{,}5$ mm. Der Abstand *a* zwischen der ersten Elektrode 18 und der zweiten Elektrode 19 beträgt $a = 0{,}2$ mm. Somit ist der sensitive Bereich des ersten Permittivitätssensors kleiner als kleinste Strömungsstrukturen des Mediums 5.

Der Sensorträger 10 weist eine Ausnehmung 20 auf, in welcher der Dichtesensor 15 angeordnet ist. Der Dichtesensor 15 ist in diesem Ausführungsbeispiel als Piezosensor ausgebildet. Da eine Dichte des Mediums 5 an der Seite des Dichtesensors 15 bestimmt wird, welche vollständig mit dem Medium 5 in Kontakt ist, ist diese Seite der sensitive Bereich des Dichtesensors 15. Die Breite *b* und die Länge *l* dieser Seite betragen ebenfalls $b = l = 0{,}5$ mm. Somit ist der sensitive Bereich des Dichtesensors 15 kleiner als kleinst Strömungsstrukturen des Mediums 5.

Durch die Anordnung des Dichtesensors 15 in der Ausnehmung 20 und die Ausbildung der Permittivitätssensoren 13 und 14 als Leiterbahnen ist die Oberfläche des Durchflusssensors 4 annähernd eben. Da die Leiterbahnen der Permittivitätssensoren 13 und 14 bei unmittelbarem Kontakt mit dem Medium 5 beschädigt werden könnten, sind die Leiterbahnen passiviert. Die Passivierung erfolgt durch eine Passivierungsschicht 21 aus amorphem Kohlenstoff. Aus der Schnittdarstellung des Durchflusssensors 4 in Fig. 2b ist ersichtlich, dass die Höhe der Passivierung 21 derart bemessen ist, dass der Dichtesensor 15 in unmittelbaren Kontakt mit dem Medium 5 ist und die Oberfläche des Sensorverbunds 11 eben ist.

Weiter ist der Schnittdarstellung des Durchflusssensors 4 auch die elektrische Verbindung der Sensoren 13, 14 und 15 mit der Sensorsteuerung 2 zu entnehmen. Die elektrische Verbindung erfolgt durch Vias 22 und Leiterbahnen 23. Dabei erfolgt die unmittelbare Kontaktierung der Sensoren 13, 14 und 15 durch die Vias 22, wodurch auf der Seite des Sensorträgers 10, auf welcher die Elektroden 18 und 19 angeordnet sind, keine weiteren Leiterbahnen vorhanden sind, welche eine Kapazitätsbestimmung des Mediums 5 beeinträchtigen könnten. Das letzte Stück der elektrischen Verbindung ist nicht durch die Leiterbahnen 23, sondern durch Linien abstrahiert dargestellt.

Die Sensorsteuerung 2 ist zur Steuerung der Sensoren 13, 14 und 15 von beiden Durchflusssensoren 4 ausgebildet. Dazu gehört insbesondere ein Bestimmen von Permittivitäten des Mediums 5 mit jedem der vier Permittivitätssensoren 13 und 14 und ein Bestimmen von Dichten des Mediums 5 mit jedem der zwei Dichtesensoren 15.

Da die Sensorsteuerung 2 in Bezug auf die vier Permittivitätssensoren 13 und 14 identisch ausgestaltet ist, wird im Folgenden die Ausgestaltung der Sensorsteuerung in Bezug auf den ersten Permittivitätssensor 13 beschrieben.

Zur Bestimmung einer ersten Permittivität des Mediums 5 mit dem ersten Permittivitätssensor 13 weist die Sensorsteuerung 2 einen elektrischen LC-Schwingkreis 24 mit einer Resonanzfrequenz auf. Dabei ist der erste Permittivitätssensor 13 ein Teil des Schwingkreises 24. Da die Elektroden 18 und 19 zusammen mit dem Medium 5 einen Kondensator mit einer Kapazität bilden, in dem das Medium 5 ein Dielektrikum ist, trägt der Permittivitätssensor 13 zur kapazitiven Komponente des Schwingkreises 24 bei. Die Sensorsteuerung 2 bestimmt die erste Permittivität des Mediums 5 aus der Resonanzfrequenz unter Berücksichtigung, dass die Resonanzfrequenz von der Kapazität und die Kapazität von der Permittivität des Mediums 5 abhängt.

Zur Bestimmung einer zweiten Permittivität des Mediums 5 mit dem zweiten Permittivitätssensor 14 ist die Sensorsteuerung 2 entsprechend ausgebildet.

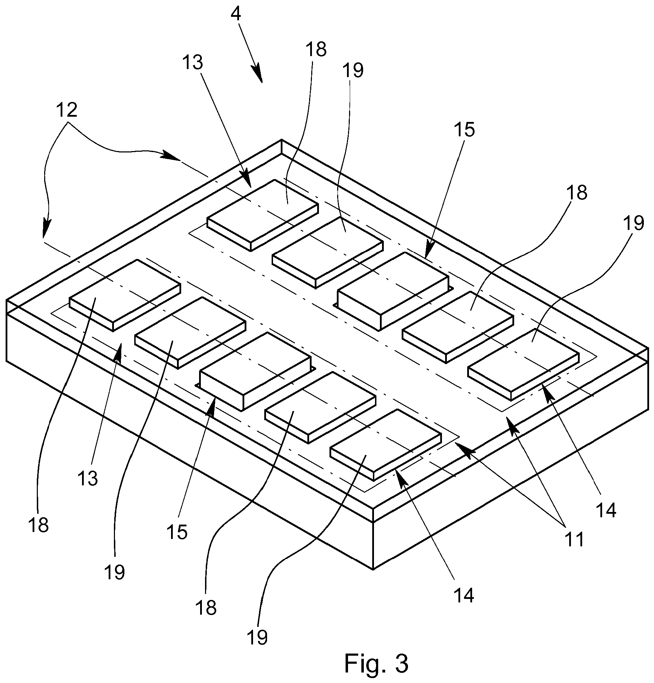

Fig. 3 zeigt in einer abstrahierten perspektivischen Darstellung wesentliche Merkmale ein zweites Ausführungsbeispiel eines Durchflusssensors 4. Der Durchflusssensor 4 weist einen Sensorträger 10 mit zwei Sensorverbünden 11 auf. Jeder der beiden Sensorverbünde 11 ist identisch mit dem Sensorverbund aus dem ersten Ausführungsbeispiel eines Durchflusssensors 4 ausgebildet. Im in Fig. 3 dargestellten zweiten Ausführungsbeispiel sind die Sensorachsen 12 parallel zueinander ausgerichtet. Die geringe Größe der sensitiven Bereiche der Sensoren 13, 14 und 15 in Bezug auf Strömungsstrukturen des Mediums 5 ermöglicht den in Fig. 3 dargestellten geringen Abstand der Sensorverbünde 11. In Verbindung mit der parallelen Ausrichtung der Sensorachsen 12 weisen Bestimmungen von Permittivitäten und Dichten durch die Sensorverbünde 11 Redundanz auf, welche eine Messgenauigkeit verbessert. In einem dritten Ausführungsbeispiel des Durchflusssensors 4 sind die Sensorachsen 12 der Sensorverbünde 11 nicht parallel, sondern senkrecht zueinander, also verschieden, ausgerichtet, wodurch die Sensorachsen 12 eine Ebene aufspannen und die Sensorverbünde 11 für Strömungsgeschwindigkeiten in voneinander verschiedene Richtungen sensitiv sind.

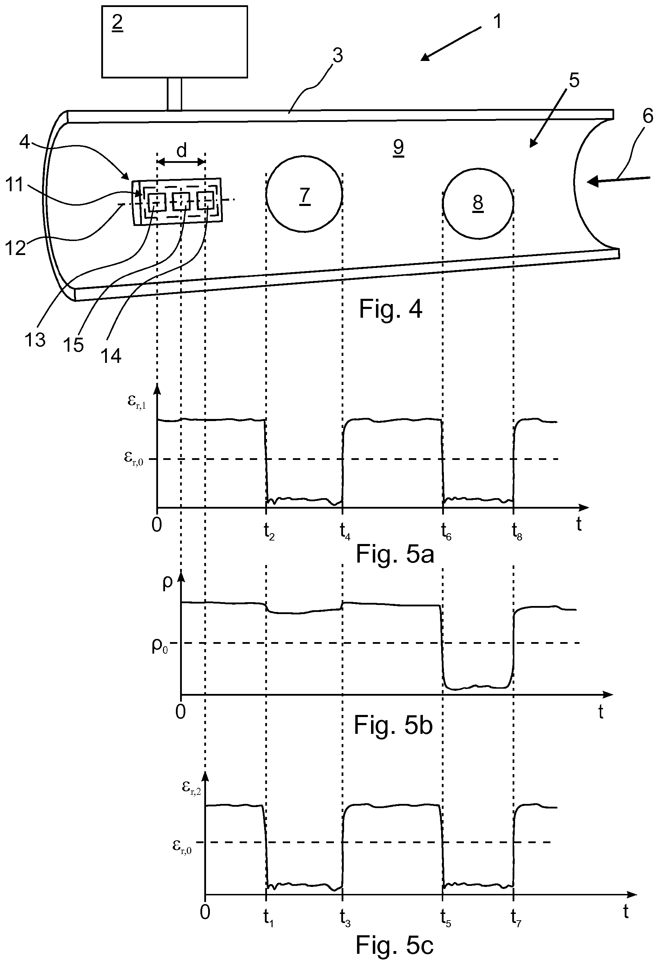

Fig. 4 zeigt ein zweites Ausführungsbeispiel eines Durchflussmessgeräts 1. Das zweite Ausführungsbeispiel weist im Gegensatz zum ersten Ausführungsbeispiel nur einen Durchflusssensor 4 auf und die Sensorsteuerung 2 ist entsprechend zur Steuerung nur eines Durchflusssensors ausgebildet. Im Übrigen ist das zweite mit dem ersten Ausführungsbeispiel identisch.

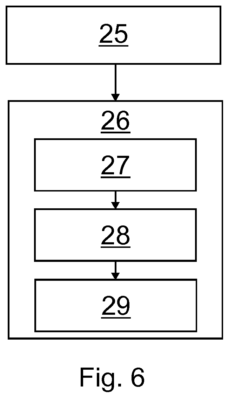

Die Sensorsteuerung 2 ist ausgebildet, im Betrieb des Durchflussmessgeräts 1 ein Verfahren mit den in Fig. 6 dargestellten Verfahrensschritten auszuführen.

In einem ersten Verfahrensschritt 25 wird mit dem ersten Permittivitätssensor 13 ein erster Permittivitätsverlauf $\varepsilon_{r,1}$, mit dem zweiten Permittivitätssensor ein zweiter Permittivitätsverlauf $\varepsilon_{r,2}$ und mit dem Dichtesensor ein Dichteverlauf p des Mediums 5 bestimmt. Der erste Permittivitätsverlauf ist in Fig. 5a, der Dichteverlauf in 5b und der zweite Permittivitätsverlauf in Fig. 5c dargestellt.

In einem zweiten Verfahrensschritt 26 werden unter Verwendung eines Korrelationsverfahrens auf den ersten Permittivitätsverlauf $\varepsilon_{r,1}$, den zweiten Permittivitätsverlauf $\varepsilon_{r,2}$ und den Dichteverlauf p Geschwindigkeiten von Phasen des mehrphasigen Mediums 5 bestimmt.

Zum Korrelationsverfahren gehört die Festlegung eines Permittivitätsgrenzwerts $\varepsilon_{r,0}$ und eines Dichtegrenzwerts $\rho_0$. Unter Berücksichtigung, dass die Permittivität von Wasser $\varepsilon_{r, Wasser} = 80$, von Öl $\varepsilon_{r, Öl} = 2{,}5$ und von Gas $\varepsilon_{r, Gas} = 1$ beträgt und dass die Dichte von Wasser $\rho_{Wasser} = 1000$ kg/m$^3$, von Öl $\rho_{Öl} = 800$ kg/m$^3$, und von Gas p = 1 kg/m$^3$ beträgt, wird als Permittivitätsgrenzwert $\varepsilon_{r,0} = 40$ und als Dichtegrenzwert $\rho_0 = 500$ kg/m$^3$ festgelegt. Oberhalb des Permittivitätsgrenzwerts $\varepsilon_{r,0}$ wird von der Phase Wasser und unterhalb von der Phase Öl oder Gas ausgegangen. Oberhalb des Dichtegrenzwerts $\rho_0$ wird von der Phase Wasser oder Öl und unterhalb von Gas ausgegangen.

Der zweite Verfahrensschritt 26 weist mehrere Unterverfahrensschritte auf.

In einem ersten Unterverfahrensschritt 27 werden Permittivitätsabnahmen von oberhalb nach unterhalb des Permittivitätsgrenzwerts $\varepsilon_{r,0}$ im ersten Permittivitätsverlauf $\varepsilon_{r,1}$ detektiert, und zwar eine erste Permittivitätsabnahme zum Zeitpunkt $t_2$, und eine zweite Permittivitätsabnahme zum Zeitpunkt $t_6$. Diese Permittivitätsabnahmen werden auch im zweiten Permittivitätsverlauf $\varepsilon_{r,2}$ detektiert und zwar zu den Zeitpunkten $t_1$, und $t_5$.

In einem zweiten Unterverfahrensschritt 28 werden Permittivitätsänderungsabstände $\Delta t_1 = (t_2 - t_1)$ und $\Delta t_2 = (t_6 - t_5)$ zwischen den Permittivitätsabnahmen im ersten Permittivitätsverlauf $\varepsilon_{r,1}$ und im zweiten Permittivitätsverlauf $\varepsilon_{r,1}$ bestimmt und unter Verwendung der Permittivitätsänderungsabstände $\Delta t_1$ und $\Delta t_2$ und des Permittivitätssensorabstands d Geschwindigkeiten $v_1 = d/\Delta t_1$ und $v_2 = d/\Delta t_2$ der Permittivitätsabnahmen bestimmt.

In einem dritten Unterverfahrensschritt 29 werden unter Verwendung des Dichteverlaufs p und des ersten Permittivitätsverlaufs $\varepsilon_{r,1}$ und des zweiten Permittivitätsverlaufs $\varepsilon_{r,2}$ Geschwindigkeiten von Phasen des mehrphasigen Mediums 5 Geschwindigkeiten der Permittivitätsabnahmen $v_1$ und $v_2$ zugeordnet.

Da bei der ersten Permittivitätsabnahme der Dichteverlauf p oberhalb des Dichtegrenzwerts $\rho_0$ bleibt, handelt es sich um Öl und wird der Ölblase 9 die Geschwindigkeit $v_1 = d/\Delta t_1$ zugeordnet. Da bei der zweiten Permittivitätsabnahme der Dichteverlauf p von oberhalb nach unterhalb des Dichtegrenzwerts $\rho_0$ verläuft, handelt es sich um Gas und wird der Gasblase 10 die Geschwindigkeit $v_2 = d/\Delta t_2$ zugeordnet.

Somit sind die Durchflussmessgeräte 1 nach beiden Ausführungsbeispielen zur Bestimmung von Geschwindigkeiten von Phasen eines mehrphasigen Mediums ausgebildet.

**Bezugszeichen**

| | |
|---|---|
| 1 | Durchflussmessgerät |
| 2 | Sensorsteuerung |
| 3 | Messrohr |
| 4 | Durchflusssensor |
| 5 | Medium |
| 6 | Gesamtströmungsrichtung |
| 7 | Ölblase |
| 8 | Gasblase |
| 9 | Wasser |
| 10 | Sensorträger |
| 11 | Sensorverbund |
| 12 | Sensorachse |
| 13 | Erster Permittivitätssensor |
| 14 | Zweiter Permittivitätssensor |
| 15 | Dichtesensor |
| 16 | Erste Messposition |
| 17 | Zweite Messposition |
| 18 | Erste Elektrode |
| 19 | Zweite Elektrode |
| 20 | Ausnehmung |
| 21 | Passivierungsschicht |
| 22 | Via |
| 23 | Leiterbahn |
| 24 | LC-Schwingkreis |
| 25 | Erster Verfahrensschritt |
| 26 | Zweiter Verfahrensschritt |
| 27 | Erster Unterverfahrensschritt |
| 28 | Zweiter Unterverfahrensschritt |
| 29 | Dritter Unterverfahrensschritt |
| a | Abstand zwischen den Elektroden 18 und 19 |
| b | Breite der Elektroden 18 und 19 und Breite des Dichtesensors 15 |
| d | Permittivitätssensorabstands |
| $\varepsilon_{r,1}$ | Erster Permittivitätsverlauf |
| $\varepsilon_{r,2}$ | Zweiter Permittivitätsverlauf |
| $\varepsilon_{r,0}$ | Permittivitätsgrenzwerts |
| l | Länge der Elektroden 18 und 19 und Länge des Dichtesensors 15 |
| p | Dichteverlauf |
| $\rho_0$ | Dichtegrenzwert |
| t | Zeit |

$\Delta t_{1,2}$     Permittivitätsänderungsabstände

$v_{1,2}$     Geschwindigkeiten

## Patentansprüche

1. Durchflusssensor (4) für ein Durchflussmessgerät (1),

   > wobei das Durchflussmessgerät (1) zur Bestimmung von Geschwindigkeiten ($v_1$, $v_2$) von Phasen eines mehrphasigen Mediums (5) ausgebildet ist und wobei der Durchflusssensor (4) einen Sensorträger (10) und der Sensorträger (10) mindestens einen ersten Sensorverbund (11) aufweist,
   > **dadurch gekennzeichnet,**
   > **dass** der mindestens erste Sensorverbund (11) einen ersten Permittivitätssensor (13) zur Bestimmung einer ersten Permittivität eines mehrphasigen Mediums (5), einen zweiten Permittivitätssensor (14) zur Bestimmung einer zweiten Permittivität des Mediums (5), einen Dichtesensor (15) zur Bestimmung einer Dichte des Mediums (5) und eine erste Sensorachse (12) aufweist,
   > **dass** der erste Permittivitätssensor (13), der zweite Permittivitätssensor (14) und der Dichtesensor (15) auf dem Sensorträger (10) entlang der ersten Sensorachse (12) angeordnet sind und
   > **dass** der erste Permittivitätssensor (13) und der zweite Permittivitätssensor (14) mit einem Permittivitätssensorabstand (d) beabstandet sind.

2. Durchflusssensor (4) nach Anspruch 1, **dadurch gekennzeichnet, dass** sensitive Bereiche der Sensoren (13, 14, 15) kleiner als kleinste Strömungsstrukturen des Mediums (5) sind, vorzugsweise kleiner als 0,5 mm sind.

3. Durchflusssensor (4) nach Anspruch 1 oder 2, **dadurch gekennzeichnet, dass** der Dichtesensor (15) zwischen dem ersten Permittivitätssensor (13) und dem zweiten Permittivitätssensor (14) angeordnet ist.

4. Durchflusssensor (4) nach einem der Ansprüche 1 bis 3, **dadurch gekennzeichnet, dass** der Sensorträger (10) eine Platine ist.

5. Durchflusssensor (4) nach einem der Ansprüche 1 bis 4, **dadurch gekennzeichnet, dass** mindestens der erste Permittivitätssensor (13) als Kapazitätssensor ausgebildet ist.

6. Durchflusssensor (4) nach Anspruch 5, **dadurch gekennzeichnet, dass** der Kapazitätssensor eine erste Elektrode (18) und eine zweite Elektrode (19) zur Bestimmung einer Kapazität des Mediums (5) aufweist.

7. Durchflussmesser nach Anspruch 4 und 6, **dadurch gekennzeichnet, dass** mindestens die erste Elektrode (18) als eine Leiterbahn (23) der Platine ausgebildet ist.

8. Durchflussmesser nach Anspruch 7, **dadurch gekennzeichnet, dass** zumindest die Leiterbahn (23) passiviert ist, vorzugsweise durch amorphen Kohlenstoff.

9. Durchflusssensor (4) nach einem der Ansprüche 1 bis 8, **dadurch gekennzeichnet, dass** der Dichtesensor (15) als Piezosensor ausgebildet ist.

10. Durchflusssensor (4) nach Anspruch 9, **dadurch gekennzeichnet, dass** der Piezosensor als Film-Bulk-Acoustic-Wave-Resonator ausgebildet ist.

11. Durchflusssensor (4) nach einem der Ansprüche 1 bis 8, **dadurch gekennzeichnet, dass** der Dichtesensor (15) ein kapazitiver mikromechanischer Ultraschallwandler ist.

12. Durchflusssensor (4) nach einem der Ansprüche 1 bis 11, **dadurch gekennzeichnet, dass** der Sensorträger (10) eine Ausnehmung (20) aufweist und der Dichtesensor (15) in der Ausnehmung (20) angeordnet ist.

13. Durchflusssensor (4) nach einem der Ansprüche 1 bis 12, **dadurch gekennzeichnet, dass** mindestens einer der Sensoren (13, 14, 15) als ein Mikrosensor ausgebildet ist.

14. Durchflusssensor (4) nach einem der Ansprüche 1 bis 13, **dadurch gekennzeichnet, dass** der Sensorträger (10) einen zweiten Sensorverbund (11) mit einer zweiten Sensorachse (12) aufweist und dass die erste Sensorachse (12) und die zweite Sensorachse (12) voneinander verschieden sind.

15. Verfahren zur Bestimmung von Geschwindigkeiten ($v_1$, $v_2$) von Phasen eines mehrphasigen Mediums (5) mit einem Durchflusssensor (4) nach einem der Ansprüche 1 bis 14, wobei, wenn der Durchflusssensor (4) in ein strömendes mehrphasiges Medium (5) eingetaucht ist,

   > - mit dem ersten Permittivitätssensor (13) ein erster Permittivitätsverlauf ($\varepsilon_{r,1}$), mit dem zweiten Permittivitätssensor (14) ein zweiter Permittivitätsverlauf ($\varepsilon_{r,2}$) und mit dem Dichtesensor (15) ein Dichteverlauf (p) des Mediums (5) bestimmt wird und

- unter Verwendung eines Korrelationsverfahrens auf den ersten Permittivitätsverlauf ($\varepsilon_{r,1}$), den zweiten Permittivitätsverlauf ($\varepsilon_{r,2}$) und den Dichteverlauf ($\rho$) mindestens eine Geschwindigkeit ($v_1$, $v_2$) einer Phase des Mediums (5) bestimmt wird.

16. Verfahren nach Anspruch 15, wobei während des Korrelationsverfahrens

   - eine Permittivitätsänderung im ersten Permittivitätsverlauf ($\varepsilon_{r,1}$) detektiert wird, die eine Permittivitätsänderung im zweiten Permittivitätsverlauf ($\varepsilon_{r,2}$) detektiert wird,
   - ein Permittivitätsänderungsabstand ($\Delta t_1$, $\Delta t_2$) zwischen der einen Permittivitätsänderung im ersten Permittivitätsverlauf ($\varepsilon_{r,1}$) und im zweiten Permittivitätsverlauf ($\varepsilon_{r,2}$) bestimmt wird, unter Verwendung des einen Permittivitätsänderungsabstands ($\Delta t_1$, $\Delta t_2$) und des Permittivitätssensorabstands (d) eine Geschwindigkeit ($v_1$, $v_2$) der einen Permittivitätsänderung bestimmt wird und
   - unter Verwendung des Dichteverlaufs (p) und/oder des ersten Permittivitätsverlaufs ($\varepsilon_{r,1}$) und/oder des zweiten Permittivitätsverlaufs ($\varepsilon_{r,2}$) einer Geschwindigkeit einer Phase des Mediums (5) die eine Geschwindigkeit ($v_1$, $v_2$) der Permittivitätsänderung zugeordnet wird.

17. Durchflussmessgerät (1) mit einer Sensorsteuerung (2), einem Messrohr (3) und mindestens einem ersten Durchflusssensor (4),

   wobei das Durchflussmessgerät (1) zur Bestimmung von Geschwindigkeiten ($v_1$, $v_2$) von Phasen eines mehrphasigen Mediums (5) in dem Messrohr (3) ausgebildet ist,
   **dadurch gekennzeichnet,**
   **dass** der mindestens erste Durchflusssensor (4) nach einem der Ansprüche 1 bis 14 ausgebildet ist,
   die Sensorsteuerung (2) zur Ausführung eines Verfahrens nach Anspruch 15 oder 16 ausgebildet ist und
   **dass** der mindestens erste Durchflusssensor (4) an einer ersten Messposition (16) am Messrohr (3) angeordnet ist, sodass, wenn ein mehrphasiges Medium (5) durch das Messrohr (3) strömt, er vom Medium (5) umströmt ist, er eine erste Eindringtiefe in das Medium (5) aufweist und die erste Sensorachse (12) eine zu einer Strömungsrichtung des Mediums (5) parallele Komponente aufweist.

18. Durchflussmessgerät (1) nach Anspruch 17, **dadurch gekennzeichnet, dass** das Messrohr (3) ausgebildet ist, sodass der mindestens erste Durchflusssensor (4) im Betrieb aus- und einbaubar ist.

19. Durchflussmessgerät (1) nach Anspruch 17 oder 18, **dadurch gekennzeichnet, dass** die Sensorsteuerung (2) mindestens einen Schwingkreis mit einer Resonanzfrequenz aufweist, dass der erste Permittivitätssensor (13) ein Teil des Schwingkreises ist und dass die erste Permittivität des Mediums (5) unter Verwendung der Resonanzfrequenz bestimmt wird.

20. Durchflussmessgerät (1) nach Anspruch 17, **dadurch gekennzeichnet, dass** das Durchflussmessgerät (1) einen zweiten Durchflusssensor (4) an einer zweiten Messposition (17) mit einer zweiten Eindringtiefe aufweist und die zweite Messposition (17) von der ersten Messposition (16) und/oder die zweite Eindringtiefe von der ersten Eindringtiefe verschieden sind bzw. ist.

**Claims**

1. A flow sensor (4) for a flowmeter (1),

   wherein the flowmeter (1) is designed for determining speeds ($v_1$, $v_2$) of phases of a multiphase medium (5) and
   wherein the flow sensor (4) has a sensor carrier (10) and the sensor carrier (10) has at least one first sensor array (11),
   **characterized in**
   **that** the at least first sensor array (11) has a first permittivity sensor (13) for determining a first permittivity of a multi-phase medium (5), a second permittivity sensor (14) for determining a second permittivity of the medium (5), a density sensor (15) for determining a density of the medium (5) and a first sensor axis (12),
   **that** the first permittivity sensor (13), the second permittivity sensor (14) and the density sensor (15) are arranged on the sensor carrier (10) along the first sensor axis (12), and
   **that** the first permittivity sensor (13) and the second permittivity sensor (14) are spaced apart with a permittivity sensor distance (d).

2. Flow sensor (4) according to claim 1, **characterized in that** sensitive areas of the sensors (13, 14, 15) are smaller than smallest flow structures of the medium (5), preferably less than 0.5 mm.

3. Flow sensor (4) according to claim 1 or 2, **characterized in that** the density sensor (15) is arranged between the first permittivity sensor (13) and the second permittivity sensor (14).

4. Flow sensor (4) according to any one of claims 1 to 3, **characterized in that** the sensor carrier (10) is a printed circuit board.

5. Flow sensor (4) according to any one of claims 1 to 4, **characterized in that** at least the first permittivity sensor (13) is designed as a capacitance sensor.

6. Flow sensor (4) according to claim 5, **characterized in that** that the capacitance sensor has a first electrode (18) and a second electrode (19) for determining a capacitance of the medium (5).

7. Flow sensor (4) according to claims 4 and 6, **characterized in that** the at least the first electrode (18) is designed as a trace (23) of the printed circuit board.

8. Flow sensor (4) according to claim 7, **characterized in that** at least the trace (23) is passivated, preferably by amorphous carbon.

9. Flow sensor (4) according to any one of claims 1 to 8, **characterized in that** the density sensor (15) is designed as a piezo sensor.

10. Flow sensor (4) according to claim 9, **characterized in that** the peizo sensor is designed as a film bulk acoustic wave resonator.

11. Flow sensor (4) according to any one of claim 1 to 8, **characterized in that** the density sensor (15) is a capacitive micromechanical ultrasound transducer.

12. Flow sensor (4) according to any one of claims 1 to 11, **characterized in that** the sensor carrier (10) has a recess (20) and the density sensor (15) is arranged in the recess (20).

13. Flow sensor (4) according to any one of claims 1 to 12, **characterized in that** at least one of the sensors (13, 14, 15) is designed as microsensor.

14. Flow sensor (4) according to any one of claims 1 to 13, **characterized in that** the sensor carrier (10) has a second sensor array (11) with a second sensor axis (12) and that the first sensor axis (12) and the second sensor axis (12) differ from one another.

15. Method for determining speeds ($v_i$, $v_2$) of phases of a multi-phase medium (5) having a flow sensor (4) according to any one of claims 1 to 14, wherein, when the flow sensor (4) is immersed into a flowing multi-phase medium,

- a first permittivity curve ($\varepsilon_{r,1}$) is determined with the first permittivity sensor (13), a second permittivity curve ($\varepsilon_{r,2}$) is determined with the second permittivity sensor (14) and a density curve (p) of the medium (5) is determined with the density sensor (15) and
- at least one speed ($v_1$, $v_2$) of a phase of the medium (5) is determined from the first permittivity curve ($\varepsilon_{r,1}$), the second permittivity curve ($\varepsilon_{r,2}$) and the density curve (p) using a correlation method.

16. Method according to claim 15, wherein during the correlation method

- a permittivity change is detected in the first permittivity curve ($\varepsilon_{r,1}$), the permittivity change is detected in the second permittivity curve ($\varepsilon_{r,2}$),
- a permittivity change interval ($\Delta t_1$, $\Delta t_2$) is determined between the permittivity change in the first permittivity curve ($\varepsilon_{r,1}$) and in the second permittivity curve ($\varepsilon_{r,2}$), a speed ($v_1$, $v_2$) of the one permittivity change is determined using the permittivity change interval ($\Delta t_1$, $\Delta t_2$) and the permittivity sensor distance (d), and
- the speed ($v_i$, $v_2$) of the permittivity change is assigned to a speed of a phase of the medium (5) using the density curve (p) and/or the first permittivity curve ($\varepsilon_{r,1}$) and/or the second permittivity curve ($\varepsilon_{r,2}$).

17. Flowmeter (1) having a sensor control (2), a measuring tube (3) and at least a first flow sensor (4),

wherein the flowmeter (1) is designed for determining speeds ($v_1$, $v_2$) of phases of a multi-phase medium (5) in a measuring tube (3), **characterized in that** the at least first flow sensor (4) is designed according to any one of claims 1 to 14, **that** the sensor control (2) is designed for carrying out a method according to claim 15 or 16, and **that** the at least first flow sensor (4) is arranged at a first measuring position (16) on the measuring tube (3) so that when a multi-phase medium (5) flows through the measuring tube (3), the medium (5) flows around the flow sensor (4), the flow sensor (4) has a first immersion depth in the medium (5) and the first sensor axis (12) has a component parallel to the direction of flow of the medium (5).

18. Flowmeter (1) according to claim 17, **characterized in that** the measuring tube (3) is designed so that the at least first flow sensor (4) can be inserted and removed during operation.

19. Flowmeter (1) according to claim 17 or 18, **characterized in that** the sensor control (2) has at least one resonant circuit (24) having a resonance frequency, that the first permittivity sensor (13) is a part of the resonant circuit (24) and that the first permittivity of the medium (5) is determined using the resonance frequency.

**20.** Flowmeter (1) according to claim 17, **characterized in that** the flowmeter (1) has a second flow sensor (4) at a second measuring position (17) having a second immersion depth and the second measuring position (17) differs from the first measuring position (16) and/or the second immersion depth differs from the first immersion depth.

**Revendications**

**1.** Capteur de débit (4) pour un débitmètre (1),

le débitmètre (1) étant réalisé pour déterminer des vitesses ($v_1$, $v_2$) de phases d'un milieu multiphase (5), et
le capteur de débit (4) présentant un support de capteur (10), et le support de capteur (10) présentant au moins un premier ensemble de capteurs (11), **caractérisé**
**en ce que** ledit au moins premier ensemble de capteurs (11) présente un premier capteur de permittivité (13) pour déterminer une première permittivité d'un milieu multiphase (5), un deuxième capteur de permittivité (14) pour déterminer une deuxième permittivité du milieu (5), un capteur de densité (15) pour déterminer une densité du milieu (5) et un premier axe de capteur (12),
**en ce que** le premier capteur de permittivité (13), le deuxième capteur de permittivité (14) et le capteur de densité (15) sont disposés sur le support de capteur (10) le long du premier axe de capteur (12), et
**en ce que** le premier capteur de permittivité (13) et le deuxième capteur de permittivité (14) sont espacés d'une distance de capteur de permittivité (d).

**2.** Capteur de débit (4) selon la revendication 1, **caractérisé en ce que** des zones sensibles des capteurs (13, 14, 15) sont plus petites que les plus petites structures d'écoulement du milieu (5), de préférence plus petites que 0,5 mm.

**3.** Capteur de débit (4) selon la revendication 1 ou 2, **caractérisé en ce que** le capteur de densité (15) est disposé entre le premier capteur de permittivité (13) et le deuxième capteur de permittivité (14).

**4.** Capteur de débit (4) selon l'une quelconque des revendications 1 à 3, **caractérisé en ce que** le support de capteur (10) est une platine.

**5.** Capteur de débit (4) selon l'une quelconque des revendications 1 à 4, **caractérisé en ce qu'**au moins le premier capteur de permittivité (13) est réalisé sous forme de capteur de capacité.

**6.** Capteur de débit (4) selon la revendication 5, **caractérisé en ce que** le capteur de capacité présente une première électrode (18) et une deuxième électrode (19) pour déterminer une capacité du milieu (5).

**7.** Débitmètre selon les revendications 4 et 6, **caractérisé en ce qu'**au moins la première électrode (18) est réalisée sous forme de piste conductrice (23) de la platine.

**8.** Débitmètre selon la revendication 7, **caractérisé en ce qu'**au moins la piste conductrice (23) est passivée, de préférence au carbone amorphe.

**9.** Capteur de débit (4) selon l'une quelconque des revendications 1 à 8, **caractérisé en ce que** le capteur de densité (15) est réalisé sous forme de capteur piézoélectrique.

**10.** Capteur de débit (4) selon la revendication 9, **caractérisé en ce que** le capteur piézoélectrique est réalisé sous forme de résonateur acoustique massif à couche mince.

**11.** Capteur de débit (4) selon l'une quelconque des revendications 1 à 8, **caractérisé en ce que** le capteur de densité (15) est un transducteur ultrasonique micromécanique capacitif.

**12.** Capteur de débit (4) selon l'une quelconque des revendications 1 à 11, **caractérisé en ce que** le support de capteur (10) présente un évidement (20), et le capteur de densité (15) est disposé dans l'évidement (20) .

**13.** Capteur de débit (4) selon l'une quelconque des revendications 1 à 12, **caractérisé en ce qu'**au moins l'un des capteurs (13, 14, 15) est réalisé sous forme de microcapteur.

**14.** Capteur de débit (4) selon l'une quelconque des revendications 1 à 13, **caractérisé en ce que** le support de capteur (10) présente un deuxième ensemble de capteurs (11) comprenant un deuxième axe de capteur (12), et **en ce que** le premier axe de capteur (12) et le deuxième axe de capteur (12) sont différents l'un de l'autre.

**15.** Procédé de détermination de vitesses ($v_1$, $v_2$) de phases d'un milieu multiphase (5), avec un capteur de débit (4) selon l'une quelconque des revendications 1 à 14, dans lequel, lorsque le capteur de débit (4) est plongé dans un milieu multiphase (5) en mouvement,

- le premier capteur de permittivité (13) détermine un premier tracé de permittivité ($\varepsilon_{r,1}$), le deuxième capteur de permittivité (14) détermine un deuxième tracé de permittivité ($\varepsilon_{r,2}$), et le capteur de densité (15) détermine un tracé de densité (p) du milieu (5), et
- en utilisant un procédé de corrélation sur le premier tracé de permittivité ($\varepsilon_{r,1}$), le deuxième tracé de permittivité ($\varepsilon_{r,2}$) et le tracé de densité ($\rho$), au moins une vitesse ($v_1$, $v_2$) d'une phase du milieu (5) est déterminée.

16. Procédé selon la revendication 15, dans lequel, pendant le procédé de corrélation,

- une variation de permittivité est détectée dans le premier tracé de permittivité ($\varepsilon_{r,1}$), ladite une variation de permittivité étant détectée dans le deuxième tracé de permittivité ($\varepsilon_{r,2}$),
- une distance de variation de permittivité ($\Delta t_1$, $\Delta t_2$) entre ladite une variation de permittivité dans le premier tracé de permittivité ($\varepsilon_{r,1}$) et dans le deuxième tracé de permittivité ($\varepsilon_{r,2}$) est déterminée, en utilisant ladite une distance de variation de permittivité ($\Delta t_1$, $\Delta t_2$) et la distance de capteur de permittivité ($d$), une vitesse ($v_1$, $v_2$) de ladite une variation de permittivité est déterminée, et
- en utilisant le tracé de densité (p) et/ou le premier tracé de permittivité ($\varepsilon_{r,1}$) et/ou le deuxième tracé de permittivité ($\varepsilon_{r,2}$), ladite une vitesse ($v_1$, $v_2$) de la variation de permittivité est associée à une vitesse d'une phase du milieu (5).

17. Débitmètre (1) comprenant une commande de capteur (2), un tube de mesure (3) et au moins un premier capteur de débit (4),

le débitmètre (1) étant réalisé pour déterminer des vitesses ($v_1$, $v_2$) de phases d'un milieu multiphase (5) dans le tube de mesure (3),
**caractérisé**
**en ce que** ledit au moins premier capteur de débit (4) est réalisé selon l'une quelconque des revendications 1 à 14,
la commande de capteur (2) est réalisée pour exécuter un procédé selon la revendication 15 ou 16, et
**en ce que** ledit au moins premier capteur de débit (4) est disposé dans une première position de mesure (16) sur le tube de mesure (3) de sorte que quand un milieu multiphase (5) s'écoule par le tube de mesure (3), il est contourné par le milieu (5), qu'il présente une première profondeur de pénétration dans le milieu (5), et le premier axe de capteur (12) présente une composante parallèle à une direction d'écoulement du milieu (5).

18. Débitmètre (1) selon la revendication 17, **caractérisé en ce que** le tube de mesure (3) est réalisé de telle sorte que ledit au moins premier capteur de débit (4) peut être démonté et remonté en cours de fonctionnement.

19. Débitmètre (1) selon la revendication 17 ou 18, **caractérisé en ce que** la commande de capteur (2) présente au moins un circuit oscillant ayant une fréquence de résonance, **en ce que** le premier capteur de permittivité (13) fait partie du circuit oscillant, et **en ce que** la première permittivité du milieu (5) est déterminée en utilisant la fréquence de résonance.

20. Débitmètre (1) selon la revendication 17, **caractérisé en ce que** le débitmètre (1) présente un deuxième capteur de débit (4) dans une deuxième position de mesure (17) à une deuxième profondeur de pénétration, et la deuxième position de mesure (17) est différente de la première position de mesure (16) et/ou la deuxième profondeur de pénétration est différente de la première profondeur de pénétration.

Fig. 1

Fig. 2a

Fig. 2b

Fig. 3

Fig. 4

Fig. 5a

Fig. 5b

Fig. 5c

Fig. 6

**IN DER BESCHREIBUNG AUFGEFÜHRTE DOKUMENTE**

**In der Beschreibung aufgeführte Patentdokumente**

- US 6823271 B1